# EUROPÄISCHE PATENTANMELDUNG

(11) **EP 4 578 721 A1**
(43) Veröffentlichungstag der Anmeldung: **02.07.2025**
(21) Anmeldenummer: 24220686.0
(22) Anmeldetag: 17.12.2024
(51) Int. Cl.: B60L 53/64, B60L 53/65, B60L 53/66, G06Q 50/06

(54) **COMPUTER-IMPLEMENTIERTES VERFAHREN UND SYSTEM ZUM FREISCHALTEN EINER LADESÄULE**

(30) Priorität: 18.12.2023 DE 102023212863
(71) Anmelder: Robert Bosch GmbH, 70442 Stuttgart (DE)
(72) Erfinder: Denz, Holger, 70469 Stuttgart (DE); Eirich, Alexander, 70437 Stuttgart (DE); Beder, Kirill, 73431 Aalen (DE)

(57) **Zusammenfassung**

Computer-implementiertes Verfahren und System zum Freischalten einer Ladesäule (LS) für die Vornahme eines Ladevorganges durch ein Fahrzeug (F) mit den Schritten: Bereitstellen (S1) von Zertifikaten (Z) von Mobilitätsanbieterverträgen, die zwischen einem oder mehreren Fahrzeugnutzern (N) des Fahrzeugs (F) und Mobilitätsanbietern (MSP) bestehen; Auswählen (S2) eines geeigneten Zertifikates aus den bereitgestellten Zertifikaten (Z) in Abhängigkeit von Merkmalen des vorzunehmenden Ladevorganges und/oder des momentanen Fahrzeugnutzers (N) und/oder des Fahrzeuges (F) und/oder in Abhängigkeit von Daten der Mobilitätsanbieterverträge; und Authentifizieren (S3) des Fahrzeuges (F) gegenüber der Ladesäule (LS) unter Verwendung des ausgewählten Zertifikates (Z) zur Freischaltung der Ladesäule (LS) für die Vornahme des Ladevorganges.

## Beschreibung

Die vorliegende Erfindung betrifft ein computer-implementiertes Verfahren zum Freischalten einer Ladesäule und ein System zum Betreiben mindestens einer Ladesäule für die Vornahme eines Ladevorganges durch ein Fahrzeug.

### Stand der Technik

Die DE 10 2021 131 515 A1 beschreibt ein Fortbewegungsmittel einen Server, eine Ladesäule sowie ein Verfahren zum Autorisieren eines Ladevorgangs an einer Ladesäule zum Laden eines elektrisch antreibbaren Fortbewegungsmittels. Das Verfahren umfasst die Schritte: Assoziieren des Fortbewegungsmittels mit der Ladesäule, Empfangen einer Identifikation der Ladesäule im Fortbewegungsmittel, Verbinden des Fortbewegungsmittels mit einem ersten Server zum Erhalten einer vordefinierten Referenz vom ersten Server, Überprüfen der Identifikation mittels der vordefinierten Referenz, und in Abhängigkeit des Ergebnisses des Überprüfens ein Autorisieren des Ladevorgangs.

Die DE 10 2021 126 186 A1 beschreibt ein Verfahren zur Kommunikation betreffend mindestens eine fahrzeugindividuelle Kennung eines Fahrzeugs mit einem Dienst, die folgende von dem Fahrzeug 1 durchgeführte Schritte aufweisen: Abfragen einer Kennung des Fahrzeugs; Ausgeben der Kennung an den Dienst; sowie folgende von dem Dienst durchgeführte Schritte: Empfangen der Kennung, die vom Fahrzeug ausgegeben wurde; Bearbeiten der Kennung durch Vergleichen der Kennung mit Referenzdaten; Ausgeben zumindest einer Instruktion.

Die DE 10 2017 209 069 A1 betrifft ein System zum Ermöglichen eines Ladevorgangs eines elektrischen Energiespeichers eines Kraftfahrzeugs an einer Ladesäule, umfassend einen Fahrzeugschlüssel mit einem RFID-Transponder; eine fahrzeugseitige Schnittstelle und/oder eine Schnittstelle an einem Smartphone, welche dazu eingerichtet ist, drahtlos ein Zertifikat an den Fahrzeugschlüssel zu übertragen, welches ein Aufladen des elektrischen Energiespeichers an vorgegebenen Ladesäulen ermöglicht; wobei der Fahrzeugschlüssel dazu eingerichtet ist, das Zertifikat mittels des RFID-Transponders an den vorgegebenen Ladesäulen nachzuweisen.

Die DE 10 2020 107 365 A1 betrifft ein Verfahren zum Freischalten eines elektrischen Ladevorgangs zwischen einem Elektrofahrzeug und einer Ladestation, wobei mittels eines von dem Kraftfahrzeug verschiedenen Bediengeräts eines Benutzers Zertifikatsdaten zum Freischalten des Ladevorgangs in einer Servereinrichtung hinterlegt werden und das Bediengerät mittels eines vorbestimmten Übertragungsbefehls die Zertifikatsdaten in einen Datenspeicher, der in der Servereinrichtung dem Kraftfahrzeug zugeordnet ist, überträgt und bevor oder während das Kraftfahrzeug für den Ladevorgang an die Ladestation angeschlossen ist, ein Steuergerät des Kraftfahrzeugs Zugriffsdaten zum Zugreifen auf den Datenspeicher an eine Freischaltschaltung der Ladestation aussendet und die Freischaltschaltung anhand der Zugriffsdaten bei der Servereinrichtung die Zertifikatsdaten aus dem Datenspeicher des Kraftfahrzeugs anfordert und, falls die angeforderten Zertifikatsdaten ein vorbestimmtes Zulässigkeitskriterium erfüllen, den Ladevorgang durchführt.

Beim Ladestandard CCS kann das Elektro-Fahrzeug sich gegenüber der Ladesäule mittels eines privaten Vertragszertifikats authentifizieren und damit die Ladesäule für den Ladevorgang automatisch freischalten. Der Ladevorgang wird auf den Vertrag des zugehörigen Vertragszertifikats abgerechnet. In einem Datenspeicher des Fahrzeugs können mehrere solcher Vertragszertifikate gespeichert werden, analog zu mehreren RFID-Karten/Apps pro Nutzer. Die Authentifizierung mittels eines Vertragszertifikats wird in der ISO15118-2 bzw. - 20 beschrieben.

Bei Vorhandensein mehrerer Vertragszertifikate für das Fahrzeug ist der Nutzer daher gezwungen sich über die Konditionen seiner Verträge an der jeweiligen Ladesäule selbstständig zu informieren und per Eingabe (OEM-App, EV Dashboard) ein Zertifikat bei jedem einzelnen Ladevorgang auswählen. Der Komfort der Plug & Charge Authentifizierung gegenüber mehrere RFID-Karten/Apps wird somit geschmälert.

Eine Festlegung auf ein Default-Vertragszertifikat kann dazu führen, dass sich das Fahrzeug mit einem Vertragszertifikat mit ungünstigen Konditionen (Energie €/kWh, Blockiergebühr €/min) an der jeweiligen Ladesäule authentifiziert, obwohl ein anderes installiertes Vertragszertifikat deutlich günstiger wäre.

Beim DC-Schnellladen nach dem CCS-Standard gibt es die Möglichkeit, die Ladesäule mittels eines in dem Fahrzeug gespeicherten privaten Vertragszertifikats freizuschalten. Die Zertifikatsinformationen wird hierbei vom Fahrzeug an die Ladesäule übertragen und verwendet, um die Ladesäule freizuschalten und den Ladevorgang auf den zu dem Zertifikat zugehörigen Vertrag abzurechnen. Die Übermittlung des verwendeten Zertifikats ist in der ISO15118-2 bzw. ISO15118-20 beschrieben. Die ISO 15118 Straßenfahrzeuge-Kommunikationsschnittstelle zwischen dem Fahrzeug und der Ladestation stellt eine internationale Norm dar, welche Festlegungen zur bidirektionalen Kommunikation zwischen Elektrofahrzeugen und Ladestationen enthält.

Die Plug-&-Charge-Funktion nach ISO 15118 ermöglicht eine benutzerfreundliche und sichere Schnittstelle zwischen dem Elektrofahrzeug und einer Ladestation, die eine zusätzliche Benutzeraktion zur Autorisierung bei jedem Ladevorgang überflüssig macht. Nach einmaliger Registrierung des Fahrzeugs und Autorisierung für eine Bezahlfunktion reicht es bei jedem Ladevorgang aus, dass der Nutzer das Elektrofahrzeug und die Ladestation mit dem Ladekabel verbindet. Das Fahrzeug übermittelt automatisch die zur Autorisierung des Bezahlvorgangs erforderlichen Daten an die Ladestation.

Es ist bekannt, dass ein oder mehrere Zertifikate in einem Fahrzeug gespeichert werden können, mit denen der Ladevorgang freigegeben und abgerechnet werden kann. Falls mehrere Zertifikate vorliegen, muss jedoch eine Entscheidung getroffen werden, welches Zertifikat für diesen Ladevorgang verwendet werden soll. Dies kann herkömmlicherweise durch Benutzereingabe in ein Infotainmentsystem des Fahrzeuges geschehen. Allerdings ist dieser manuelle Schritt unkomfortabel und verzögert den Ladevorgang.

Eine Auswahl eines geeigneten Zertifikats ist zudem nicht einfach, da sich die in dem zugehörigen Vertrag festgelegten Tarife während der Zertifikatslaufzeit ändern können und je nach Ladesäule nur bestimmte Zertifikate für die Freischaltung akzeptiert werden (für die der Ladesäulenbetreiber mit dem das Zertifikat ausstellenden Mobilitätsdienstleister zusammenarbeitet), und je nach gewähltem Vertrag (Zertifikat) für einen identischen Ladevorgang unterschiedliche Kosten anfallen können.

### Offenbarung der Erfindung

Die vorliegende Erfindung schafft ein computer-implementiertes Verfahren zum Freischalten einer Ladesäule für die Vornahme eines Ladevorganges durch ein Fahrzeug nach Anspruch 1 und ein System zum Betreiben mindestens einer Ladesäule für die Vornahme eines Ladevorganges durch ein Fahrzeug nach Anspruch 14.

Die Erfindung schafft gemäß einem ersten Aspekt ein computer-implementiertes Verfahren zum Freischalten einer Ladesäule für die Vornahme eines Ladevorganges durch ein Fahrzeug mit den Schritten:
Bereitstellen von digitalen Zertifikaten von Mobilitätsanbieterverträgen, die zwischen einem oder mehreren Fahrzeugnutzern des Fahrzeugs und
Mobilitätsanbietern bestehen, wobei für jeden Mobilitätsanbietervertrag ein
digitales Zertifikat in einem digitalen Datenspeicher des Fahrzeuges installiert wird;
Auswählen eines geeigneten digitalen Zertifikates aus den bereitgestellten Zertifikaten automatisch in Abhängigkeit von vorkonfigurierten Merkmalen des vorzunehmenden Ladevorganges und/oder des momentanen Fahrzeugnutzers und/oder des Fahrzeuges und/oder in Abhängigkeit von Daten der Mobilitätsanbieterverträge; und
Authentifizieren des Fahrzeuges gegenüber der Ladesäule unter Verwendung des ausgewählten digitalen Zertifikates zur Freischaltung der Ladesäule für die Vornahme des Ladevorganges.

Das erfindungsgemäße Verfahren und das erfindungsgemäße System ermöglichen es, bei mehreren in einem Datenspeicher des Fahrzeugs gespeicherten Vertragszertifikaten das für diesen Ladevorgang optimale Zertifikat für die Freischaltung der Ladesäule zu verwenden. Z.B. kann es sein, dass die Ladesäule Verträge mit mehreren Mobilitätsdienstleistern (Mobility Service Provider) unterstützt, der Ladevorgang je nach Vertag aber unterschiedlich abgerechnet wird.

Die Erfindung schafft gemäß einem weiteren Aspekt ein System zum Betreiben mindestens einer Ladesäule für die Vornahme eines Ladevorganges durch ein Fahrzeug mit:
einem Datenspeicher welcher digitale Zertifikate von
Mobilitätsanbieterverträgen, die zwischen einem oder mehreren Fahrzeugnutzern des Fahrzeugs und Mobilitätsanbietern bestehen, speichert;
einem Rechner, der dazu ausgelegt ist, ein geeignetes digitales Zertifikat aus den bereitgestellten digitalen Zertifikaten in Abhängigkeit von Merkmalen des vorzunehmenden Ladevorganges und/oder des momentanen Fahrzeugnutzers und/oder des Fahrzeuges und/oder in Abhängigkeit von Daten der Mobilitätsanbieterverträge automatisch auszuwählen; und mit
einer Authentifizierungseinheit zur Authentifizierung des Fahrzeuges gegenüber der Ladesäule unter Verwendung des von dem Rechner ausgewählten digitalen Zertifikates zur Freischaltung der Ladesäule für die Vornahme des Ladevorganges.

Bevorzugte Weiterbildungen sind Gegenstand der Unteransprüche.

### Vorteile der Erfindung

Eine Grundidee der Erfindung besteht darin, dass ein geeignetes Zertifikat aus mehreren bereitgestellten Zertifikaten in Abhängigkeit von einem oder mehreren Merkmalen automatisch auszuwählen. Hierdurch wird der Auswahlvorgang des Zertifikates und somit der gesamte Ladeprozess erheblich beschleunigt. Zudem können Fehler, die bei einer manuellen Auswahl des Zertifikates auftreten, vermieden werden. Es wird zudem sichergestellt, dass der Ladevorgang zu den für den Fahrzeugnutzer günstigsten Konditionen erfolgt.

Ein digitales Zertifikat ist ein elektronischer Echtheitsnachweis, der von einer Zertifizierungsstelle CA (Certification Authority) ausgestellt wird. Bei dem digitalen Zertifikat handelt es sich um einen digitalen Datensatz, der nach Standards der ITU-T oder der IETF erstellt wird. Das digitale Zertifikat bestätigt bestimmte Eigenschaften von Personen oder Objekten und ermöglicht die Prüfung der Authentizität und Integrität mithilfe kryptografischer Verfahren. Das digitale Zertifikat enthält die erforderlichen Daten zur Überprüfung und wird von der Zertifizierungsstelle CA ausgestellt.

Die zertifikatbasierte Authentifizierung mit Hilfe eines automatisch ausgewählten Zertifikats bietet verschiedene Vorteile.

Ein digitales Zertifikat bietet erhöhte Sicherheit. Durch die Beseitigung der Notwendigkeit zahlreicher Passwörter, die durch Phishing, Diebstahl, Abfangen, Weitergabe oder auf andere Weise kompromittiert werden können, wird das Risiko eines Cyberangriffs verringert.

Die erzeugten digitalen Zertifikate lassen sich einfach verteilen. Die digitalen Zertifikate können zudem automatisch installiert werden. Nach der Installation eines digitalen Zertifikats sind in der Regel keine weiteren Maßnahmen seitens des Nutzers erforderlich.

Das zertifikatbasierte System kann mit einer cloud-basierten Verwaltungsplattform ausgestattet werden. Diese Verwaltungsplattform ermöglicht es beispielsweise Administratoren von Organisationen digitale Zertifikate für neue Mitarbeiter auszustellen oder Zertifikate zu erneuern. Ferner ist es möglich Zertifikate zu widerrufen, wenn ein Mitarbeiter die Organisation verlässt.

Ein Unterscheidungsmerkmal der zertifikatbasierten Authentifizierung besteht darin, dass im Gegensatz zu einigen herkömmlichen Mechanismen, die nur für Benutzer funktionieren, wie z.B. Einmal-Passwörter (OTP), der gleiche Authentifizierungsmechanismus für alle Endpunkte verwendet werden kann - Benutzer, Computer, Geräte.

Bei einer möglichen Ausführungsform des computer-implementiertes Verfahrens weisen die zur automatischen Auswahl des geeigneten digitalen Zertifikates herangezogenen Merkmale des Ladevorganges eine eindeutige Kennung der Ladesäule und/oder einen Standort der Ladesäule auf.

Hierdurch können digitale Zertifikate bereitgestellt werden, die zu Mobilitätsanbieterverträgen gehören, welche Nutzern für unterschiedliche Gebiete unterschiedliche Konditionen bieten.

Bei einer möglichen Ausführungsform des computer-implementiertes Verfahrens weisen die zur automatischen Auswahl des geeigneten digitalen Zertifikates herangezogenen Merkmale des Ladevorganges eine prognostizierte Ladezeit und/oder eine prognostizierte Ladeleistung auf.

Bei einer möglichen Ausführungsform des computer-implementiertes Verfahrens wird der momentane Fahrzeugnutzer des Fahrzeuges automatisch erkannt.

Selbst wenn ein Fahrzeug verschiedene Fahrzeugnutzer hat kann somit das für den aktuellen Fahrzeugnutzer hinsichtlich der damit verbundenen Konditionen günstigste Zertifikat schnell und zuverlässig ausgewählt bzw. selektiert werden.

Bei einer möglichen Ausführungsform des computer-implementiertes Verfahrens wird der momentane Fahrzeugnutzer des Fahrzeuges anhand eines verwendeten Funkschlüssels, anhand eines eingestellten Fahrerprofils, anhand einer bestehenden Kommunikations-Verbindung zwischen einem Nutzerendgerät und dem Fahrzeug, anhand von Kamerabilddaten, anhand von an dem Fahrersitz sensorisch erfassten Gewichtsdaten, anhand von biometrischen Daten und/oder anhand einer eingegebenen persönlichen Identifikationsnummer automatisch erkannt.

Dies erlaubt es einen momentanen Fahrzeugnutzer des Fahrzeuges schnell und mit hoher Zuverlässigkeit zu erkennen und das für den erkannten Fahrzeugnutzer geeignetste digitale Zertifikat innerhalb kurzer Zeit bereitzustellen.

Bei einer möglichen Ausführungsform des computer-implementiertes Verfahrens werden die zur Auswahl des geeigneten digitalen Zertifikates verwendeten Daten der Mobilitätsanbieterverträge aus einer Tarifdatenbank ausgelesen.

Der Datenzugriff erfolgt effizient und stellt alle für die Entscheidung bzw. Auswahl des geeignetsten Zertifikates relevanten Daten zur Verfügung.

Bei einer möglichen Ausführungsform des computer-implementiertes Verfahrens wird keines der bereitgestellten digitalen Zertifikate ausgewählt, falls die Konditionen zur Vornahme des Ladevorganges an der Ladesäule ohne Vorliegen eines der Mobilitätsanbieterverträge günstiger sind.

Hierdurch ist sichergestellt, dass der Ladevorgang an der Ladesäule stets mit den günstigsten Konditionen erfolgt.

Bei einer möglichen Ausführungsform des computer-implementiertes Verfahrens erfolgt eine externe Authentifizierung des Fahrzeuges gegenüber der Ladesäule unter Verwendung eines anderen Authentifizierungs-mechanismus, falls kein digitales Zertifikat verfügbar ist oder keines der bereitgestellten digitalen Zertifikate aufgrund der ungünstigen Konditionen ausgewählt wird.

Eine Authentifizierung des Fahrzeuges ist somit stets möglich.

Hierdurch ist es für einen Fahrzeugnutzer eines Fahrzeugs oder eine Organisation zum Betreiben von Fahrzeugen möglich eine Vielzahl von Mobilitätsanbieterverträgen mit unterschiedlichen Mobilitätsanbietern zu schließen und zu nutzen. Es besteht somit ein hohes Maß an Flexibilität.

Bei einer möglichen Ausführungsform des computer-implementiertes Verfahrens übermittelt das Fahrzeug Merkmale des vorzunehmenden Ladevorganges und/oder des momentanen Fahrzeugnutzers und/oder des Fahrzeuges über eine Kommunikationsverbindung an einen externen Rechner, welcher das geeignete digitale Zertifikat auswählt und diese Zertifikat-Auswahl an das Fahrzeug zurückübermittelt.

Dies bietet den Vorteil, dass der externe Rechner über eine hohe Rechenleistung verfügt und somit der Selektionsvorgang zur Auswahl des digitalen Zertifikates beschleunigt werden kann.

Bei einer möglichen Ausführungsform des computer-implementiertes Verfahrens wird das ausgewählte digitale Zertifikat mit den zugehörigen Konditionen zur Vornahme des Ladevorganges an der Ladesäule dem Fahrzeugnutzer über eine Nutzerschnittstelle des Fahrzeuges und/oder über eine Nutzerschnittstelle der Ladesäule angezeigt.

Hierdurch erhält der Fahrzeugnutzer die Möglichkeit von den Konditionen des geplanten Ladevorganges Kenntnis zu erlangen und gegebenenfalls auf die Vornahme des Ladevorganges zu verzichten.

Bei einer möglichen Ausführungsform des computer-implementiertes Verfahrens wird der Fahrzeugnutzer zur Vornahme einer externen Authentifizierung über eine Nutzerschnittstelle aufgefordert wird, falls kein digitales Zertifikat verfügbar ist oder keines der bereitgestellten digitalen Zertifikate aufgrund der ungünstigen Konditionen ausgewählt wird.

Bei einer möglichen Ausführungsform des computer-implementiertes Verfahrens erfolgt die externe Authentifizierung des Fahrzeuges gegenüber der Ladesäule mittels eines externen Mediums, insbesondere einer RFID Kundenkarte des Fahrzeugnutzers, oder mittels einer Smart-Phone-Applikation.

Dies stellen weit verbreitete und sichere Authentifizierungsmöglichkeiten dar.

Bei einer möglichen Ausführungsform des computer-implementiertes Verfahrens werden bei einem erkannten Wechsel des Fahrzeugnutzers die zu den Mobilitätsanbieterverträgen des momentanen Fahrzeugnutzers gehörigen Zertifikate automatisch in den Datenspeicher des Fahrzeugs geladen und aktiviert und die zu den Mobilitätsanbieterverträgen des vorherigen Fahrzeugnutzers zugehörigen Zertifikate automatisch deaktiviert oder gelöscht.

Dies hat den Vorteil, dass bei einer Vielzahl von Fahrzeugnutzern, beispielsweise bei einem Leihwagen, Speicherplatz in dem Datenspeicher des Fahrzeugs gespart wird.

Weitere Merkmale und Vorteile von Ausführungsformen der Erfindung ergeben sich aus der nachfolgenden Beschreibung in Bezug auf die beigefügten Zeichnungen.

### Kurze Beschreibung der Zeichnungen

Die vorliegende Erfindung wird nachfolgend anhand der in den schematischen Figuren der Zeichnung angegebenen Ausführungsbeispiele näher erläutert.

Es zeigen:
Fig.1 ein Ablaufdiagramm zur Darstellung einer möglichen Ausführungsform des erfindungsgemäßen Verfahrens;
Fig.2 eine schematische Darstellung zur Erläuterung der Funktionsweise des erfindungsgemäßen Verfahrens und Systems; und
Fig.3 eine schematische Darstellung einer möglichen Ausführungsform des erfindungsgemäßen Systems.

In den Figuren bezeichnen gleiche Bezugszeichen gleiche bzw. funktionsgleiche Elemente.

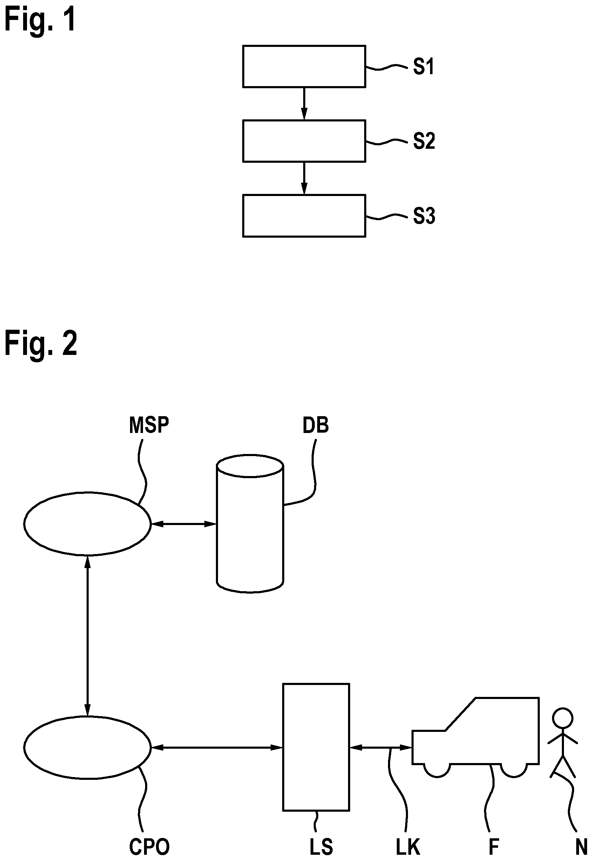

Das in Fig.1 dargestellte Ablaufdiagramm zeigt eine mögliche Ausführungsform des erfindungsgemäßen Verfahrens mit mehreren Hauptschritten S.

Zunächst werden in einem ersten Schritt S1 des Verfahrens digitale Zertifikate Z von Mobilitätsanbieterverträgen, die zwischen einem oder mehreren Fahrzeugnutzern N des Fahrzeugs F und Mobilitätsanbietern MSP bestehen, bereitgestellt.

Bei einer möglichen Ausführungsform wird für jeden Mobilitätsanbietervertrag ein digitales Zertifikat Z erstellt und in einem Datenspeicher DS des Fahrzeuges F gespeichert bzw. installiert.

Der in Fig. 2 dargestellte e-Mobility Service Provider bzw. der Mobilitätsanbieter MSP ist dasjenige Unternehmen, mit dem der Fahrzeugnutzer N einen Mobilitätsanbietervertrag für alle Dienstleistungen im Zusammenhang mit elektrischem Aufladen seines Fahrzeugs F geschlossen hat. Der Mobilitätsanbieter MSP hat mehrere Verantwortlichkeiten, die von der Bereitstellung von Apps, um Ladestationen LS zu finden und dort hin zu navigieren, der Verwaltung und Erweiterung des Roaming-Netzwerks, und der Kundenverwaltung bis hin zur Festlegung der Preise der Ladesessions für den Fahrzeugnutzer N reichen.

Der in Fig.2 dargestellte Charge Point Operator (CPO) bzw. Ladepunktbetreiber ist ein Unternehmen, das ein Netz von Ladestationen LS betreibt, verwaltet und einrichtet. Während der CPO die Ladeinfrastruktur verwaltet und einrichtet und die Ladestationen LS unterhält, bietet der Mobilitätsanbieter MSP diese Ladeinfrastruktur den tatsächlichen Kunden bzw. Nutzern N an.

Der Betreiber eines öffentlich zugänglichen Ladepunkts an einer Ladesäule LS hat den Nutzern N von Elektromobilen bzw. Elektrofahrzeugen F das punktuelle Laden zu ermöglichen. Punktuelles Aufladen bedeutet, dass der Kunde den Ladepunkt spontan (ad-hoc) nutzen kann, ohne eine dauerhafte Vertragsbeziehung mit dem Betreiber eingehen zu müssen.

Die Plug-&-Charge-Funktion (abgekürzt auch P&C oder PnC) nach ISO 15118 ermöglicht eine benutzerfreundliche und sichere Schnittstelle zwischen einem Elektrofahrzeug F und einer Ladestation LS, die eine zusätzliche Benutzeraktion zur Autorisierung bei jedem Ladevorgang überflüssig macht. Nach einmaliger Registrierung des Fahrzeugs F und Autorisierung für eine Bezahlfunktion reicht es bei jedem Ladevorgang aus, dass der Nutzer N das Elektrofahrzeug F und die Ladestation LS mit dem Ladekabel LK verbindet. Das Fahrzeug F übermittelt über ein Kommunikationsverbindung automatisch die zur Autorisierung des Bezahlvorgangs erforderlichen Daten an die Ladestation LS.

In einem weiteren Schritt S2 des in Fig.1 dargestellten computer-implementierten Verfahrens wird ein geeignetes Zertifikate Z aus den im Schritt S1 bereitgestellten Zertifikaten Z in Abhängigkeit von technischen Merkmalen M1 des vorzunehmenden Ladevorganges und/oder Merkmalen M2 des momentanen Fahrzeugnutzers N und/oder technischen Merkmalen M3 des Fahrzeuges F und/oder in Abhängigkeit von gespeicherten Daten der Mobilitätsanbieterverträge automatisch ausgewählt. Die zur Auswahl verwendeten Merkmale M werden bei einer möglichen Ausführungsform vorkonfiguriert.

Es wird im Schritt S2 aus mehreren verfügbaren digitalen Zertifikaten Z das für den aktuellen Ladevorgang geeignetste Zertifikat Z automatisch ausgewählt. Geeignet kann dabei z.B. die Auswahl des günstigsten an diese Ladesäule LS unterstützten Zertifikats Z sein, d.h. dasjenige Zertifikat dessen zugehöriger Mobilitätsanbietervertrag dem Fahrzeugnutzer N an der betreffenden Ladesäule LS zu dem aktuellen Zeitpunkt die günstigsten Konditionen zum Laden (oder auch Entladen) seines Fahrzeugs F bietet.

Alternativ kann für bestimmte Ladesäulen LS auch kein Zertifikat Z ausgewählt werden und eine Rückmeldung ("kein geeignetes Zertifikat") an den Nutzer N ausgegeben werden. Dies kann z.B. dann erfolgen, wenn die mit dem günstigsten unterstützten Zertifikat Z erzielbaren Preise über einer von dem Nutzer N vorgegebenen Preis- Schwelle liegen.

Das Fahrzeug F sendet bei einer möglichen Ausführungsform vor dem eigentlichen Ladevorgang (Laden oder auch Entladen der Fahrzeugbatterie des Fahrzeuges F) Informationen bezüglich des geplanten Ladevorgangs an einen über eine Kommunikationsverbindung mit dem Fahrzeug F verbundenen externen Rechner R (z.B. ein Cloud Service). Der externe Rechner R wählt basierend auf den von dem Fahrzeug F erhaltenen Informationen (z.B. Identifikationsnummer der Ladesäule LS, Position des Fahrzeugs F) und weiterer Daten (z.B. aktuelle Tarifdatenbank der verschiedenen Mobilitätsanbieterverträge) das am besten geeignete in dem Fahrzeug F installierte verfügbare Zertifikat Z aus.

Die Auswahl des Zertifikates Z im Schritt S2 erfolgt bei dieser Ausführungsvariante durch einen externen Rechner R eines Datennetzwerkes. Der externe Rechner R übermittelt dann die getroffene Auswahl an das Fahrzeug F. Die Authentifizierungseinheit AE der Steuerung des Fahrzeugs F verwendet im Schritt S3 das anhand der übermittelten Auswahl spezifizierte digitale Zertifikat Z zur Authentifizierung des Fahrzeugs F gegenüber der Ladesäule LS, um den Ladevorgang freizuschalten.

Die Datenübertragung zwischen einer Kommunikationsschnittstelle des Fahrzeugs F und dem externen Rechner R kann dabei über Mobilfunk oder WLAN erfolgen. Denkbar ist auch, dass das Fahrzeug F zunächst einen Value Added Service an der Ladesäule LS bucht und dann über diesen Value Added Service eine Datenverbindung zur Tarifabfrage tätigt.

Bei einer alternativen Ausführungsvariante wählt ein interner Rechner R der Steuerung des Fahrzeugs F im Schritt S2 ein gespeichertes Vertragszertifikat Z aus mehreren für das Fahrzeug F verfügbaren Vertragszertifikaten Z lokal aus.

Das erfindungsgemäße Verfahren ermöglicht es, bei mehreren in einem externen oder internen Datenspeicher DS des Fahrzeugs F gespeicherten Vertragszertifikaten Z das für den gewünschten Ladevorgang optimale Zertifikat Z für die Freischaltung an der Ladesäule LS zu verwenden. Beispielsweise besteht die Möglichkeit, dass die Ladesäule LS Verträge mit mehreren Mobilitätsdienstleistern MSP (Mobility Service Provider) unterstützt und der Ladevorgang je nach Vertrag unterschiedlich abgerechnet wird.

Bei einer möglichen Ausführungsform des computer-implementiertes Verfahrens weisen die zur automatischen Auswahl des geeigneten Zertifikates Z im Schritt S2 herangezogenen Merkmale M des Ladevorganges eine eindeutige Kennung der Ladesäule LS und/oder einen Standort der Ladesäule LS auf.

Die Auswahl des geeigneten Vertrags für den Nutzer N basiert auf einem oder mehreren vorliegenden Merkmalen M des Ladevorgangs nämlich dem Standort der Ladesäule LS, der Position des Fahrzeugs F (dies gibt den Hinweis, ob in der Heimatregion oder in einer "Roaming-Region" geladen wird) und einer eindeutigen Kennung der Ladesäule LS (z.B. EVSEID).

Bei einer möglichen Ausführungsform des in Fig.1 dargestellten computer-implementiertes Verfahrens weisen die zur automatischen Auswahl des geeigneten Zertifikates Z im Schritt S2 herangezogenen Merkmale M des Ladevorganges zudem eine prognostizierte Ladezeit und/oder eine prognostizierte Ladeleistung auf.

Die prognostizierte Ladezeit kann aus einer vom Nutzer N geplanten Abfahrtszeit des Fahrzeugs F und/oder aus einer gewünschten Energiemenge ΔSOC zum Laden oder Entladen der Fahrzeugbatterie des Fahrzeugs F berechnet werden.

Die prognostizierte Ladeleistung kann aus einer Ladeart : AC 1 -phasig, AC 3-phasig, DC und/oder aus Informationen über die verfügbare Ladeleistung (z.B. Stromnetz, Ladesäule, EV, ...) und/oder aus einem ermittelten Ladeleistungsprofil über Zeit oder SOC berechnet werden.

Der bevorzugte Tarif für die vorliegenden Merkmale wird über eine erstmalige Nutzereingabe (OEM-App, EV Dashboard) und/oder von einer externen Datenbank DB abgerufen. Die zur Auswahl des geeigneten Zertifikates Z im Schritt S2 verwendeten Daten der Mobilitätsanbieterverträge können aus einer Tarifdatenbank DB ausgelesen werden.

In einem weiteren Schritt S3 des in Fig.1 dargestellten computer-implementierten Verfahrens wird das Fahrzeug F gegenüber der Ladesäule LS unter Verwendung des im Schritt S2 ausgewählten Zertifikates Z durch eine Authentifzierungseinheit AE authentifiziert, so dass eine Freischaltung der Ladesäule LS für die Vornahme des Ladevorganges über ein Ladekabel LK erfolgt.

Bei einer möglichen Ausführungsform des in Fig.1 dargestellten computer-implementierten Verfahrens wird vor der Auswahl des Zertifikates Z im Schritt S2 zunächst der momentane Fahrzeugnutzer N des Fahrzeuges F automatisch erkannt. Der momentane Fahrzeugnutzer N des Fahrzeuges F kann anhand eines verwendeten Funkschlüssels, anhand eines eingestellten Fahrerprofils, anhand einer bestehenden Kommunikations-Verbindung zwischen einem Nutzerendgerät und dem Fahrzeug, anhand von Kamerabilddaten, anhand von an dem Fahrersitz sensorisch erfassten Gewichtsdaten, anhand von biometrischen Daten und/oder anhand einer eingegebenen persönlichen Identifikationsnummer automatisch erkannt werden.

Es gibt verschiede Möglichkeiten den momentanen Nutzer N des Fahrzeugs F zu erkennen:
A. Funkschlüssel: Jeder Nutzer des Fahrzeugs F hat einen eigenen Funkschlüssel. Beim Öffnen einer Fahrzeugtür erkennt die Steuerung des Fahrzeuges F von welchem Funkschlüssel die Öffnen-Anforderung zum Öffnen der Fahrzeugtür empfangen wird. Abhängig davon wird ein zu dem Nutzer des betreffenden Funkschlüssels gehöriges geeignetes Vertragszertifikat Z ausgewählt.
B. Fahrerprofil: Das Fahrzeug F verfügt über Fahrerprofile z.B. für die Sitzeinstellung, Ambientebeleuchtung, Klimatisierung, etc. Diese Fahrerprofile sind über Tasten eines Menüs auswählbar. Anhand des aktuell ausgewählten Fahrerprofils kann der momentane Fahrzeugnutzer N ermittelt werden und ein zughöriges geeignetes digitales Zertifikat Z ausgewählt werden.
C. Smartphone-Bluetooth Verbindung: Nach Erkennung des Smartphones über die Bluetoothverbindung (es ist auch jegliche andere Smartphone-Fahrzeug Verbindung möglich, z.B. kabelgebunden), wird der aktuelle Fahrzeugnutzer N bestimmt und der passende Ladevertrag mit zugehörigem Zertifikat Z ausgewählt.
D. Kamera: Nach Erkennung des aktuellen Fahrzeugnutzers N via Innen- und/oder Außenkamera, wird das zugehörige Vertragszertifikat Z anhand von Merkmalen M des in dem Bild erkennbaren Nutzers ausgewählt.
E. Gewichtserkennung im Fahrersitz: Die Fahrzeugnutzer N können ihr persönliches Gewicht in einem Datenspeicher DS des Fahrzeugs F hinterlegen. Eine in dem Fahrersitz integrierte Gewichtsmesseinrichtung erkennt daraufhin den aktuellen Nutzer bzw. Fahrer N anhand seines Gewichts.
F. Biometrische Überprüfung: Es kann auch eine biometrische Überprüfung der Berechtigung bzw. Identifikation des Nutzers N erfolgen.
G. PIN: Die Erkennung des Fahrzeugnutzers N erfolgt hierbei über eine zuvor definierte persönliche Identifikationsnummer (PIN) zur Berechtigung zum Öffnen des Fahrzeugs bzw. Start des Antriebsstrangs des Fahrzeuges.

Bei einer möglichen Ausführungsform des computer-implementiertes Verfahrens wird im Schritt S2 keines der im Schritt S1 bereitgestellten Zertifikate Z ausgewählt, falls die Konditionen zur Vornahme des Ladevorganges an der Ladesäule LS ohne Vorliegen eines der Mobilitätsanbieterverträge günstiger sind.

Bei einer möglichen Ausführungsform des computer-implementiertes Verfahrens erfolgt eine externe Authentifizierung des Fahrzeuges F gegenüber der Ladesäule LS unter Verwendung eines anderen Authentifizierungs-mechanismus, falls kein Zertifikat Z verfügbar ist oder im Schritt S2 keines der bereitgestellten Zertifikate Z aufgrund der ungünstigen Konditionen ausgewählt wird. Der Fahrzeugnutzer N kann zur Vornahme einer externen Authentifizierung über eine Nutzerschnittstelle UI aufgefordert werden, falls kein Zertifikat Z verfügbar ist oder keines der im Schritt S1 bereitgestellten Zertifikate Z aufgrund der ungünstigen Konditionen ausgewählt wird.

Bei einer möglichen Ausführungsform des computer-implementiertes Verfahrens übermittelt das Fahrzeug F Merkmale M des vorzunehmenden Ladevorganges und/oder des momentanen Fahrzeugnutzers N und/oder des Fahrzeuges F über eine Kommunikationsverbindung an einen externen Rechner R, welcher das geeignete Zertifikat Z auswählt und diese Zertifikat-Auswahl an das Fahrzeug F zurückübermittelt.

Bei einer möglichen Ausführungsform des computer-implementierten Verfahrens wird das im Schritt S2 ausgewählte Zertifikat Z mit den zugehörigen Konditionen zur Vornahme des Ladevorganges an der Ladesäule LS dem Fahrzeugnutzer N über eine Nutzerschnittstelle UI des Fahrzeuges F und/oder über eine Nutzerschnittstelle UI der Ladesäule LS angezeigt.

Falls kein vordefiniertes - also kein dem momentanen Fahrzeugnutzer N zugeordnetes Vertragszertifikat Z vorliegt, kann das Plug and Charge Feature deaktiviert werden. Anstelle dessen wird der Fahrzeugnutzer N aufgefordert, sich über ein externes Medium, wie z.B. einer RFID Kundenkarte oder Smartphone Applikation manuell zu authentifizieren. Eine moderne Authentifizierungslösung auf der Grundlage von RFID- oder mobilen Technologien bietet eine einfache, bequeme und sichere Option für die Benutzerauthentifizierung und Zugangskontrolle beim Laden von Elektrofahrzeugen.

Bei der Radiofrequenz-Identifikation (RFID) wird eine kontaktlose Karte - z. B. ein Mitarbeiter- oder Mieterausweis oder eine Mitgliedskarte - zur Authentifizierung des Benutzers verwendet. Die Karte hat einen kleinen Chip, der ein Funksignal aussendet, wenn sie sich in Reichweite eines Lesegeräts befindet.

Bei einer möglichen Ausführungsform des computer-implementiertes Verfahrens werden bei einem erkannten Wechsel des Fahrzeugnutzers N die zu den Mobilitätsanbieterverträgen des momentanen Fahrzeugnutzers gehörigen Zertifikate Z automatisch in den Datenspeicher DS des Fahrzeugs F geladen und aktiviert. Ferner werden die zu den Mobilitätsanbieterverträgen des vorherigen Fahrzeugnutzers N zugehörigen Zertifikate Z automatisch deaktiviert oder gelöscht.

### Zertifikathandling im Fahrzeug:

A. Mehrere digitale Vertragszertifikate Z können bereits in dem Datenspeicher DS der Steuerung des Fahrzeugs F gespeichert sein (z.B. durch eine Werkstatt, OEM Cloud Anbindung, ...). Das geeignete Zertifikat Z wird aus einer Gruppe verfügbarer Zertifikate vorzugsweise nach Erkennung des Fahrzeugführers N ausgewählt.
B. Nach der Verwendung des Zertifikats Z zur Authentifizierung kann es bei einer möglichen Implementierung aus dem Fahrzeugdatenspeicher DS gelöscht bzw. als ungültig markiert werden. Nach der eindeutigen Erkennung eines neuen Fahrers, wird das passende Zertifikat installiert. Vor jedem Laden steht das passende Zertifikat zur Verfügung. Ein Vorteil hierbei ist, dass immer nur ein Vertragszertifikat Z in dem Datenspeicher DS des Fahrzeugs F gespeichert werden muss. Hierfür muss die Plug and Charge Infrastruktur wissen, zumindest der Contract Certificate Pool, welches Zertifikat Z als nächstes installiert werden soll. Dies kann über den OEM Cloud Service oder die Ladesäule (ISO 15118) erfolgen.

Bei einer möglichen Ausführungsform wird automatisch erkannt, welche Person innerhalb einer Personengruppe (z.B. Familie, Firmen-Mitarbeiter) das Fahrzeug (Familienauto, Firmenwagen, etc,) momentan benutzt und anschließend das richtige Vertragszertifikat Z aus denen für diese erkannte Person verfügbaren Zertifikaten Z ausgewählt. Beim anschließenden Laden, wird zur Abrechnung der zu dem momentanen Fahrzeugnutzer N passende Vertrag verwendet und belastet.

Beim Kauf des Fahrzeugs F schließt der Fahrzeugnutzer N (z.B. Fahrzeughalter) einen oder mehrere Verträge mit Mobilitätsanbietern MSP ab. Die Verträge sind einer fahrzeugspezifischen Kennnummer zugeordnet. Des Weiteren erhält jeder Vertrag eine spezifische Kennnummer. Für jeden Vertrag wird vorzugsweise ein digitales Zertifikat Z erstellt und in dem Datenspeicher DS des Fahrzeugs F abgespeichert. Durch eine geeignete Erkennung des aktuellen Fahrzeugführers, kann das passende Vertragszertifikat Z ausgewählt und für die Kostenabrechnung verwendet werden.

Beispiele für mögliche Verträge mit dem Mobilitätsanbieter MSP umfassen einen Vertrag mit einem Arbeitgeber des Fahrzeugnutzers oder einen Vertrag mit Sonderkonditionen für einen Fahrbeginner. Sonderkonditionen je nach Betriebszugehörigkeit oder je nach Dauer der Vermietung, Kundengruppe, Status, etc. sind möglich.

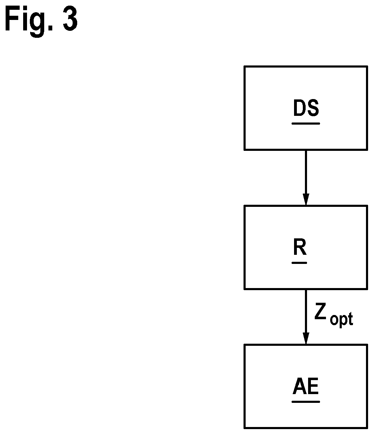

Die Figuren 2, 3 zeigen schematisch ein Ausführungsbeispiel eines Systems zum Betreiben mindestens einer Ladesäule LS für die Vornahme eines Ladevorganges durch ein Elektro-Fahrzeug F. Das System umfasst einen internen oder externen Datenspeicher DS zum Bereitstellen von Zertifikaten Z von Mobilitätsanbieterverträgen, die zwischen einem oder mehreren Fahrzeugnutzern N des Fahrzeugs F und Mobilitätsanbietern bestehen. Das System umfasst ferner einen (internen oder externen) Rechner R, der dazu ausgelegt ist, ein geeignetes Zertifikat Z aus den bereitgestellten Zertifikaten in Abhängigkeit von Merkmalen M des vorzunehmenden Ladevorganges und/oder des momentanen Fahrzeugnutzers N und/oder Merkmalen des Fahrzeuges F und/oder in Abhängigkeit von in einer Datenbank DB gespeicherten Daten der Mobilitätsanbieterverträge automatisch auszuwählen. Das System umfasst zudem eine Authentifizierungseinheit AE zur Authentifizierung des Fahrzeuges F gegenüber der Ladesäule LS unter Verwendung des von dem Rechner R automatisch ausgewählten digitalen Zertifikates Z zur Freischaltung der Ladesäule LS für die Vornahme des Ladevorganges über ein Ladekabel LK.

Obwohl die vorliegende Erfindung anhand der bevorzugten Ausführungsbeispiele vorstehend vollständig beschrieben wurde, ist sie darauf nicht beschränkt, sondern auf vielfältige Art und Weise modifizierbar.

## Patentansprüche

1. Computer-implementiertes Verfahren zum Freischalten einer Ladesäule (LS) für die Vornahme eines Ladevorganges durch ein Fahrzeug (F) mit den Schritten:
Bereitstellen (S1) von digitalen Zertifikaten (Z) von Mobilitätsanbieterverträgen, die zwischen einem oder mehreren Fahrzeugnutzern (N) des Fahrzeugs (F) und Mobilitätsanbietern (MSP) bestehen, wobei für jeden Mobilitätsanbietervertrag ein digitales Zertifikat (Z) in einem digitalen Datenspeicher (DS) des Fahrzeuges (F) installiert wird
Auswählen (S2) eines geeigneten digitalen Zertifikates aus den bereitgestellten Zertifikaten (Z) automatisch in Abhängigkeit von vorkonfigurierten Merkmalen des vorzunehmenden Ladevorganges und/oder des momentanen Fahrzeugnutzers (N) und/oder des Fahrzeuges (F) und/oder in Abhängigkeit von Daten der Mobilitätsanbieterverträge;
Authentifizieren (S3) des Fahrzeuges (F) gegenüber der Ladesäule (LS) unter Verwendung des ausgewählten digitalen Zertifikates (Z) zur Freischaltung der Ladesäule (LS) für die Vornahme des Ladevorganges.

2. Computer-implementiertes Verfahren zum Freischalten einer Ladesäule (LS) nach Anspruch 1, wobei die zur automatischen Auswahl des geeigneten digitalen Zertifikates herangezogenen Merkmale des Ladevorganges eine eindeutige Kennung der Ladesäule (LS) und/oder einen Standort der Ladesäule (LS) aufweisen.

3. Computer-implementiertes Verfahren zum Freischalten einer Ladesäule (LS) nach Anspruch 1 oder 2, wobei die zur automatischen Auswahl des geeigneten digitalen Zertifikates herangezogenen Merkmale des Ladevorganges eine prognostizierte Ladezeit und/oder eine prognostizierte Ladeleistung aufweisen.

4. Computer-implementiertes Verfahren zum Freischalten einer Ladesäule (LS) nach einem der vorangehenden Ansprüche, wobei der momentane Fahrzeugnutzer (N) des Fahrzeuges (F) automatisch erkannt wird.

5. Computer-implementiertes Verfahren zum Freischalten einer Ladesäule (LS) nach Anspruch 4, wobei der momentane Fahrzeugnutzer (N) des Fahrzeuges (F) anhand eines verwendeten Funkschlüssels, anhand eines eingestellten Fahrerprofils, anhand einer bestehenden Kommunikations-Verbindung zwischen einem Nutzerendgerät und dem Fahrzeug, anhand von Kamerabilddaten, anhand von an dem Fahrersitz sensorisch erfassten Gewichtsdaten, anhand von biometrischen Daten und/oder anhand einer eingegebenen persönlichen Identifikationsnummer automatisch erkannt wird.

6. Computer-implementiertes Verfahren zum Freischalten einer Ladesäule (LS) nach einem der vorangehenden Ansprüche, wobei die zur Auswahl des geeigneten digitalen Zertifikates verwendeten Daten der Mobilitätsanbieterverträge aus einer Tarifdatenbank ausgelesen werden.

7. Computer-implementiertes Verfahren zum Freischalten einer Ladesäule (LS) nach einem der vorangehenden Ansprüche, wobei keines der bereitgestellten digitalen Zertifikate (Z) ausgewählt wird, falls die Konditionen zur Vornahme des Ladevorganges an der Ladesäule (LS) ohne Vorliegen eines der Mobilitätsanbieterverträge günstiger sind.

8. Computer-implementiertes Verfahren zum Freischalten einer Ladesäule (LS) nach Anspruch 7, wobei eine externe Authentifizierung des Fahrzeuges (F) gegenüber der Ladesäule (LS) unter Verwendung eines anderen Authentifizierungsmechanismus erfolgt, falls kein digitales Zertifikat verfügbar ist oder keines der bereitgestellten digitalen Zertifikate (Z) aufgrund der ungünstigen Konditionen ausgewählt wird.

9. Computer-implementiertes Verfahren zum Freischalten einer Ladesäule (LS) nach einem der vorangehenden Ansprüche, wobei das Fahrzeug (F) Merkmale des vorzunehmenden Ladevorganges und/oder des momentanen Fahrzeugnutzers (N) und/oder des Fahrzeuges (F) über eine Kommunikationsverbindung an einen externen Rechner übermittelt, welcher das geeignete digitale Zertifikat (Z) auswählt und diese Zertifikat-Auswahl an das Fahrzeug (F) zurückübermittelt.

10. Computer-implementiertes Verfahren zum Freischalten einer Ladesäule (LS) nach einem der vorangehenden Ansprüche, wobei das ausgewählte digitale Zertifikat mit den zugehörigen Konditionen zur Vornahme des Ladevorganges an der Ladesäule (LS) dem Fahrzeugnutzer über eine Nutzerschnittstelle des Fahrzeuges und/oder über eine Nutzerschnittstelle der Ladesäule (LS) angezeigt wird.

11. Computer-implementiertes Verfahren zum Freischalten einer Ladesäule (LS) nach einem der vorangehenden Ansprüche, wobei der Fahrzeugnutzer (N) zur Vornahme einer externen Authentifizierung über eine Nutzerschnittstelle aufgefordert wird, falls kein digitales Zertifikat verfügbar ist oder keines der bereitgestellten digitalen Zertifikate aufgrund der ungünstigen Konditionen ausgewählt wird.

12. Computer-implementiertes Verfahren zum Freischalten einer Ladesäule (LS) nach einem der vorangehenden Ansprüche 8 bis 11, wobei die externe Authentifizierung des Fahrzeuges (F) gegenüber der Ladesäule (LS) mittels eines externen Mediums, insbesondere einer RFID Kundenkarte des Fahrzeugnutzers (N) oder einer Smart-Phone-Applikation erfolgt.

13. Computer-implementiertes Verfahren zum Freischalten einer Ladesäule (LS) nach einem der vorangehenden Ansprüche, wobei bei einem erkannten Wechsel des Fahrzeugnutzers (N) die zu den Mobilitätsanbieterverträgen des momentanen Fahrzeugnutzers gehörigen digitalen Zertifikate (Z) automatisch in den Datenspeicher des Fahrzeugs (F) geladen und aktiviert werden und die zu den Mobilitätsanbieterverträgen des vorherigen Fahrzeugnutzers (N) zugehörigen digitalen Zertifikate (Z) automatisch deaktiviert oder gelöscht werden.

14. System zum Betreiben mindestens einer Ladesäule (LS) für die Vornahme eines Ladevorganges durch ein Fahrzeug (F) mit:
einem Datenspeicher (DS), welcher digitale Zertifikate (Z) von Mobilitätsanbieterverträgen, die zwischen einem oder mehreren Fahrzeugnutzern (N) des Fahrzeugs (F) und Mobilitätsanbietern (MSP) bestehen, speichert;
einem Rechner (R), der dazu ausgelegt ist, ein geeignetes digitales Zertifikat aus den in dem Datenspeicher (DS) gespeicherten digitalen Zertifikaten (Z) in Abhängigkeit von vorkonfigurierten Merkmalen des vorzunehmenden Ladevorganges und/oder des momentanen Fahrzeugnutzers (N) und/oder des Fahrzeuges (F) und/oder in Abhängigkeit von Daten der Mobilitätsanbieterverträge automatisch auszuwählen; und
einer Authentifizierungseinheit (AE) zur Authentifizierung des Fahrzeuges (F) gegenüber der Ladesäule (LS) unter Verwendung des von dem Rechner ausgewählten digitalen Zertifikates (Z) zur Freischaltung der Ladesäule (LS) für die Vornahme des Ladevorganges.
